Europäisches Patentamt

European Patent Office

Office européen des brevets

(11) Veröffentlichungsnummer: **0 024 569**
**A2**

# (12) EUROPÄISCHE PATENTANMELDUNG

(21) Anmeldenummer: **80104517.0**

(22) Anmeldetag: **31.07.80**

(51) Int. Cl.³: **G 01 D 7/04**
**F 02 B 77/08**

(30) Priorität: **29.08.79 DE 2934839**

(43) Veröffentlichungstag der Anmeldung:
**11.03.81 Patentblatt 81/10**

(84) Benannte Vertragsstaaten:
**AT FR GB IT SE**

(71) Anmelder: **Klöckner-Humboldt-Deutz**
**Aktiengesellschaft**
**Deutz-Mülheimer-Strasse 111 Postfach 80 05 09**
**D-5000 Köln 80(DE)**

(72) Erfinder: **Garthe, Helmut**
**Brücker Mauspfad 446**
**D-5000 Köln 91(DE)**

(54) **Anzeigeelement für den Belastungszustand eines Motors.**

(57) Die Erfindung bezieht sich auf ein Anzeigegerät zum Anzeigen des wirtschaftlichen Arbeitsbereichs einer Brennkraftmaschine. Hierzu werden die augenblickliche Drehzahl und der augenblickliche Belastungszustand der Brennkraftmaschine angezeigt. Erfindungsgemäß weist das Anzeigeelement einen auf der Anzeigeskala optisch abgesetzten Arbeitsbereich auf, in dem sich die Anzeigenadeln des Anzeigegeräts aufhalten müssen, wenn die Brennkraftmaschine im wirtschaftlichen Arbeitsbereich betrieben werden soll.

EP 0 024 569 A2

Croydon Printing Company Ltd.

0024569

5000 Köln 80, den 24. Juli 1980
Unser Zeichen: D 79/46 AG-XPB Dü/Bi.

## Anzeigeelement für den Belastungs-
## zustand eines Motors

Die Erfindung bezieht sich auf eine Vorrichtung
zur Anzeige des wirtschaftlichen Arbeitsbereichs
einer Brennkraftmaschine bestehend aus zwei in
einem gemeinsamen Gehäuse angeordneten Anzeigeelementen, von denen das eine die augenblickliche
Drehzahl und das andere den augenblicklichen Belastungszustand der Brennkraftmaschine anzeigt,
wobei jedes Anzeigelement eine eigene, in einer
gemeinsamen Ebene liegende Meßwertskala und eine
dieser zugeordnete Anzeigenadel aufweist.

Es ist bekannt, Brennkraftmaschinen, insbesondere
solche, die in Kraftfahrzeugen eingebaut werden,
mit einem Drehzahlmesser auszurüsten, um den optimalen Drehzahlbereich der Brennkraftmaschine anzuzeigen. Der Drehzahlmesser alleine ist jedoch
nicht geeignet, irgendwelche Aussagen über ein
wirtschaftliches Betreiben der Brennkraftmaschine
zu machen. Hierzu ist es erforderlich, neben der Drehzahl einen weiteren Parameter zu kennen.

Aus sog. "Kraftstoff-Verbraucherkennfeldern" ist
bekannt, den mittleren Effektivdruck bzw. das abgegebene Drehmoment als zweiten Parameter für die Angabe des spezifischen Kraftstoffverbrauchs zu verwenden. Dieser zweite Parameter kann allgemein als
"Last" bezeichnet werden.

Ein diese beiden Motorparameter anzeigendes Meßgerät ist aus dem DE-Gbm 69 47 397 bekannt geworden. Dieses Anzeigegerät weist zwei parallel
zueinander angeordnete Meßskalen mit voneinander
unabhängigen Meßwerkzeigern auf, wobei ein Meßwerk die Maschinendrehzahl und das andere die
eingespritzte Kraftstoffmenge anzeigt. Die richtige
Zuordnung der Kraftstoffeinspritzung zur jeweiligen
Drehzahl ist gegeben, wenn sich beide Meßwerkzeiger
einander gegenüberstehen.

Diese Vorrichtung weist jedoch den Nachteil auf,
daß praktisch keine Toleranzbereiche angegeben
sind, so daß das Erreichen und Verbleiben der
Brennkraftmaschine im wirtschaftlichen Bereich
eine ständige Kontrolle verlangt. Dieses ist insbesondere dann nur sehr schwer möglich, wenn ein
derartiges Anzeigeinstrument in Kraftfahrzeugen
verwandt wird.

Aufgabe der Erfindung ist es deshalb, eine Vorrichtung
der eingangs genannten Art zu schaffen, welche das
Erreichen und Verbleiben der Brennkraftmaschine im
wirtschaftlichen Bereich einfach und sicher anzeigt,
so daß sie auch zum Einbau in Kraftfahrzeugen geeignet ist.

Diese Aufgabe wird erfindungsgemäß dadurch gelöst,
daß in jeder Meßwertskala ein unterer und oberer
Grenzwert in Abhängigkeit der Charakteristik der zu
messenden Brennkraftmaschine angezeigt ist, der in

-3-

BAD ORIGINAL

0024569
24. Juli 1980
D 79/46

Abhängigkeit der jeweiligen Meßgröße den wirtschaftlichen Arbeitsbereich der Brennkraftmaschine begrenzt. Diese Vorrichtung besitzt den Vorteil, daß mit einem Blick erfaßt werden kann, ob sich beide Zeiger in dem ihnen zugeordneten Toleranzfeld befinden. Eine derartige Kontrolle ist ohne erhöhte Aufmerksamkeit durchzuführen, so daß sich diese Vorrichtung besonders dazu eignet, in Kraftfahrzeugen Verwendung zu finden. Ein weiterer Vorteil der Vorrichtung ist darin zu sehen, daß an den Meßwertskalen keine Meßwerte mehr angebracht werden müssen, sondern daß außer den Grenzwertmarkierungen keine weiteren Informationen geliefert werden müssen, die eine erhöhte Aufmerksamkeit beim Ablesen und Erfassen verlangen.

Die Aussagekraft der erfindungsgemäßen Vorrichtung kann noch weiter gesteigert werden, wenn der wirtschaftliche Arbeitsbereich der Brennkraftmaschine als Fläche außerhalb der beiden Meßwertskalen angezeigt ist, wobei die Fläche von Strahlen begrenzt ist, die von den Drehachsen der Anzeigeelemente durch die jeweiligen unteren und oberen Grenzwerte auf den Meßwertskalen verlaufen und daß die Anzeigenadeln derart in ihrer Länge ausgebildet und auf einer derartigen Höhe angeordnet sind, daß sie sich im wirtschaftlichen Bereich kreuzen. Durch diese Ausbildung vereinfacht sich die Aussage des Anzeigeelementes, da nun nicht mehr zwei Zeiger und zwei getrennte Skalen überwacht und erfaßt werden müssen, sondern nur noch zwei sich kreuzende Zeiger in einem gemeinsamen Toleranzfeld.

-4-

Wird der wirtschaftliche Arbeitsbereich von den übrigen Bereichen der Ebene der Meßwertskalen und von den Farben der Meßwertzeiger farblich abgesetzt, so vereinfacht sich die Überwachung der erfindungsgemäßen Vorrichtung dahingehend, daß nur noch beobachtet werden muß, ob sich die beiden Zeiger in einem farblich gekennzeichneten Feld kreuzen.

Als Maß für den augenblicklichen Belastungszustand eignet sich die Abgastemperatur der Brennkraftmaschine oder bei Brennkraftmaschinen, die mit Einspritzpumpen ausgerüstet sind - der Regelstangenweg wie auch - wie an sich bekannt - die eingespritzte Kraftstoffmenge.

Im folgenden wird die Erfindung anhand eines bevorzugten Ausführungsbeispiels näher erläutert.

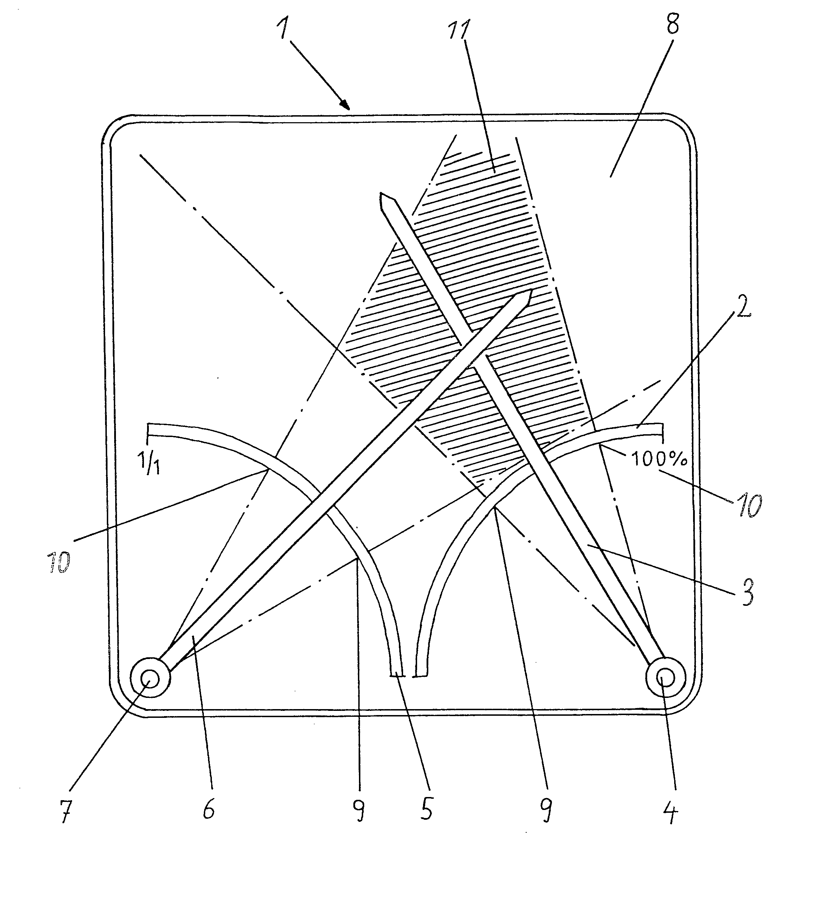

In der einzigen Abbildung ist die Anzeigevorrichtung mit 1 bezeichnet, die Meßwertskala für die Drehzahl mit 2, ihre Anzeigenadel mit 3 und ihre Drehachse mit 4, die Meßwertskala für die Last mit 5, ihre Anzeigenadel mit 6 und ihre Drehachse mit 7. Beide Meßwertskalen 2 und 5 sind in einer gemeinsamen Ebene 8 angeordnet. Die beiden Anzeigenadeln 3 und 6 weisen die gleiche Länge auf, sind aber auf unterschiedlichen Höhen angeordnet, so daß sie sich kreuzen können.

Auf jeder Meßwertskala ist ein unterer Grenzwert 9 und ein oberer Grenzwert 10 eingezeichnet. Der wirtschaftliche Arbeitsbereich 11 der Brennkraftmaschine

0024569
24. Juli 1980
D 79/46

wird in der Ebene 8 der Meßwertskalen 2 und 5 dadurch begrenzt, daß von jeder Drehachse 4 bzw. 7 Strahlen durch die unteren und oberen Grenzwerte 9 bzw. 10 verlaufen und sich außerhalb der Meßwertskalen schneiden. Der wirtschaftliche Bereich 11 ist hierbei zweckmäßigerweise irgendwie aus der Ebene 8 hervorgehoben, beispielsweise durch eine unterschiedliche Farbgebung.

Solange sich im Betrieb der Brennkraftmaschine die beiden Zeiger 3 und 6 im Arbeitsbereich 11 kreuzen, ist gewährleistet, daß die Brennkraftmaschine verbrauchsgünstig arbeitet. Erst wenn sich beide Anzeigenadeln 3 bzw. 6 nicht mehr im Bereich 11 kreuzen, kann durch Änderung der eingespritzten Kraftstoffmenge oder bei in Kraftfahrzeugen eingebauten Brennkraftmaschinen durch Änderung der Gangwahl eine Veränderung der Anzeigenadeln derart herbeigeführt werden, daß sie sich wieder im Bereich 11 kreuzen.

-6-

P a t e n t a n s p r ü c h e

1. Vorrichtung zum Anzeigen des wirtschaftlichen
Arbeitsbereichs einer Brennkraftmaschine, bestehend
aus zwei in einem gemeinsamen Gehäuse angeordneten
Anzeigeelementen, von denen das eine die augenblickliche Drehzahl und das andere den augenblicklichen
Belastungszustand der Brennkraftmaschine anzeigt,
wobei jedes Anzeigelement eine eigene in einer gemeinsamen Ebene liegende Meßwertskala und eine dieser
zugeordneten Anzeigenadel aufweist,
dadurch gekennzeichnet, daß in jeder Meßwertskala
(2, 5) ein oberer und unterer Grenzwert (9, 10)
in Abhängigkeit der Charakteristik der zu messenden
Brennkraftmaschine angezeigt ist, der in Abhängigkeit
der jeweiligen Meßgröße den wirtschaftlichen Arbeitsbereich (11) der Brennkraftmaschine begrenzt.

2. Vorrichtung nach Anspruch 1,
dadurch gekennzeichnet, daß der wirtschaftliche Arbeitsbereich (11) der Brennkraftmaschine als Fläche außerhalb der beiden Meßwertskalen (2, 5) angezeigt ist,
wobei die Fläche von Strahlen begrenzt ist, die von
den Drehachsen (4, 7) der Anzeigelemente durch die
jeweiligen unteren und oberen Grenzwerte (9, 10) auf
den Meßwertskalen (2, 5) verlaufen und daß die Anzeigenadeln (3, 6) derart in ihrer Länge ausgebildet und
auf einer derartigen Höhe angeordnet sind, daß sie
sich im wirtschaftlichen Bereich kreuzen.

-7-

0024569

24. Juli 1980
D 79/46

3. Vorrichtung nach Anspruch 1 oder 2,
dadurch gekennzeichnet, daß der wirtschaftliche
Arbeitsbereich (11) von den übrigen Bereichen der
Ebene (8) der Meßwertskalen (2, 5) und den Anzeigenadeln farblich abgesetzt ist.

4. Vorrichtung nach einem der vorangegangenen
Ansprüche,
dadurch gekennzeichnet, daß als Maß für den augenblicklichen Belastungszustand die Abgastemperatur
dient.

5. Vorrichtung nach einem der vorangegangenen Ansprüche,
dadurch gekennzeichnet, daß die mechanischen Meß-
und/oder Anzeigewerke durch rein elektronisch
arbeitende Bauelemente ersetzt werden.

D 79/46